Europäisches Patentamt

European Patent Office

Office européen des brevets

(11) Veröffentlichungsnummer: **0 007 297**
**B1**

# (12) EUROPÄISCHE PATENTSCHRIFT

(45) Veröffentlichungstag der Patentschrift:
**16.06.82**

(21) Anmeldenummer: **79890021.3**

(22) Anmeldetag: **06.07.79**

(51) Int. Cl.³: **B 60 C 27/12,** B 60 C 27/20

(54) Gleitschutzeinrichtung für Fahrzeugreifen.

(30) Priorität: **10.07.78 AT 4965/78**

(43) Veröffentlichungstag der Anmeldung:
**23.01.80 Patentblatt 80/2**

(45) Bekanntmachung des Hinweises auf die Patenterteilung:
**16.06.82 Patentblatt 82/24**

(84) Benannte Vertragsstaaten:
**BE CH DE FR GB IT LU NL SE**

(56) Entgegenhaltungen:
**AT-A- 346 196**
**CH-A- 207 950**
**DE-A-2 635 819**
**FR-A-2 061 484**
**US-A-2 753 912**

(73) Patentinhaber: **Strelli, Albert, Lagergasse 123,**
**A-8020 Graz (AT)**

(72) Erfinder: **Strelli, Albert, Lagergasse 123, A-8020 Graz**
**(AT)**

(74) Vertreter: **Krause, Ernst, Dipl.-Ing. et al, Dipl.- Ing.**
**Krause Ernst Dipl. Ing. Casati Wilhelm Patentanwälte**
**Amerlingstrasse 8, A-1061 Wien (AT)**

## Gleitschutzeinrichtung für Fahrzeugreifen

Die Erfindung betrifft eine Gleitschutzeinrichtung für Fahrzeugreifen mit einer aus schwenkbar miteinander verbundenen Gliedern bestehenden Kette, die im montierten Zustand mindestens einen Teilbereich des Reifenumfangs umfasst und bevorzugt mittels Klemmbacken, die insbes. gegen die Seitenwände des Reifens abstützbar sind, n Fahrzeugreifen fixierbar ist, wobei die Kette in htung ihrer Längserstreckung elastisch verlän- ,rbar ist, wobei ein Gummipuffer an einem der die einzelnen Glieder der Gleitschutzkette miteinander verbindenden Querbolzen angreift, der sich in Längsrichtung der Kette erstreckende Langlöcher des den Gummipuffer und ein einer Kettenlängung dienendes elastisches Glied aufweisenden Kettengliedes durchsetzt und im wesentlichen spielfrei in am benachbarten Kettenglied angeordneten Bohrungen angreift, wobei der Querbolzen mit Exzentern versehen ist, die mit Anschlägen an den Kettengliedern zusammenwirken. Gleitschutzeinrichtungen dieser Art ermöglichen es, die Kettenlänge zum Zwecke der Montage und auch der Demontage zu verlängern, und dadurch das Anlegen der Kette zu erleichtern.

Bei einer Gleitschutzeinrichtung der eingangs erwähnten Art, bei der an Stelle von Gummipuffern auch Schraubfedern Verwendung finden können, wurde es bekannt (DE-A-2 635 819), den Gummipuffer in der Krümmung der im wesentlichen U-förmigen, aus hochkant gestellten Stahlstreifen bestehenden Kettenglieder zu befestigen, derart, dass der Gummipuffer die Langlöcher, die sich in den einander gegenüberliegenden Schenkeln des U befinden, abdeckt. Wird der Querbolzen verschwenkt, so wird infolge der Exzenterwirkung der Querbolzen im Langloch verschoben und der Gummipuffer, der an dem Querbolzen anliegt, zusammengepresst. Nachteilig erscheint bei der vorbekannten Einrichtung, dass sich Fremdkörper, z.B. Sand und Eis, zwischen den Querbolzen und dem Gummipuffer festsetzen und zu Beschädigungen der Vorrichtung Anlass geben. Gemäss einer weiteren, in der vorgenannten DE-A-2 635 819 beschriebenen Ausführungsform ist der Mechanismus zur Längenänderung der Kette in einem im wesentlichen schachtelförmig ausgebildeten Kettenglied untergebracht. Bei dieser Ausführungsform sind zwei Gummipuffer vorhanden, die jeweils im Raum zwischen dem Querbolzen und der diesem Bolzen benachbarten, parallel zum Bolzen verlaufenden Querwand des schachtelartigen Kettengliedes liegen. Die beiden Querbolzen können mittels eines Schiebekeilgetriebes, das in dem Raum zwischen den beiden Bolzen im Kettenglied angeordnet ist, auseinandergedrängt werden. Die Betätigung des Schiebekeilgetriebes erfolgt durch eine gesonderte Gewindespindel, welche parallel zu den Querbolzen angeordnet ist und das Kettenglied durchsetzt. Diese Anordnung ist aufwendig und bedarf zusätzlich zu den Querbolzen noch einer Gewindespindel zur Betätigung der Einrichtung für die Längenänderung der Kette.

Der Erfindung liegt die Aufgabe zugrunde, eine Gleitschutzeinrichtung der eingangs erwähnten Art konstruktiv zu vereinfachen und funktionssicher auszubilden.

Erreicht wird dieses Ziel, wenn bei einer Gleitschutzeinrichtung der eingangs erwähnten Art, erfindungsgemäss der Querbolzen spielfrei den Gummipuffer durchsetzt, der das zur Kettenlängung dienende Glied bildet.

Durch diese Verwendung von Gummipuffern in der Verstelleinrichtung wird eine einwandfreie Halterung des Gummipuffers und eine grosse Betriebssicherheit erreicht (keine Verschmutzung bzw. Vereisung zwischen Gummiblock und Exzenterbolzen). Der Puffer dient gleichzeitig als elastisches Element zur Änderung der Kettenlänge. Der Gummipuffer kann in weiterer Ausgestaltung der Erfindung von einem die Lauffläche aufweisenden Abschnitt der Gleitschutzkette gebildet sein. Hiebei dient der die Lauffläche aufweisende Gummibelag gleichzeitig auch als Gummipuffer. Es ergibt sich hiebei eine sich durch besondere Einfachheit auszeichnende Konstruktion. Durch die Vereinigung der als Laufelemente dienenden Gummistollen und der als Federelement dienenden Gummiblöcke wird somit neben einer konstruktiven Vereinfachung eine weitere Erhöhung der Betriebssicherheit erreicht.

Der Vereinfachung der Montage und Demontage ist es weiters dienlich, wenn bei einer Gleitschutzeinrichtung, bei der die endständigen Glieder der Gleitschutzkette Ausnehmungen aufweisen, die lösbar mit Kupplungszapfen verbindbar sind, die an einem Kupplungsstück vorgesehen sind, das an einem Träger der Klemmbacken angelenkt ist, in Weiterbildung der Erfindung die Ausnehmung in einem endständigen Glied der Gleitschutzkette und der damit zusammenwirkende Kupplungszapfen am Kupplungsstück Elemente eines Bajonettverschlusses bilden. Die Ausbildung der Ausnehmung und des damit zusammenwirkenden Kupplungszapfens als Elemente eines Bajonettverschlusses erlaubt eine einfache Handhabung und ergibt eine sichere Verbindung zwischen dem Kupplungsstück und dem ihm benachbarten Kettenglied.

In weiterer Ausgestaltung der Erfindung weist der Kupplungszapfen einen an der Stirnfläche des am Kupplungsstück fixierten Bolzens befestigten Nocken auf, der in die herzförmig gestaltete Ausnehmung im endständigen Glied der Kette einschiebbar und durch Drehen um die Achse seines Bolzens vor den einspringenden Abschnitt der herzförmigen Ausnehmung schwenkbar ist. Die herzförmige Gestaltung der Aussparung ermöglicht ein Einsetzen des Nockens von beiden Seiten her. Ein derartiger erfindungsgemäss ausgestalteter Bajonettverschluss ist auch im Zusammenhang mit einer erfindungsgemäss gestalteten Gleitschutzvorrichtung anwendbar, bei der anstelle eines Gummipuffers eine Zugfederspannvorrichtung innerhalb eines schachtelartig ausgebildeten Kettengliedes angeordnet ist.

Eine weitere einfache Kupplungsmöglichkeit zwischen einem der endständigen Kettenglieder und dem Kupplungsstück ergibt sich, wenn in besonderer Ausgestaltung der Erfindung der Kupplungszapfen quer zur Längsrichtung der Gleitschutzkette zwischen zwei Wangen des Kupplungsstückes angeordnet ist und wenn die Ausnehmungen in einem endständigen Glied der Gleitschutzkette in zwei einander gegenüberliegenden Seitenwangen dieses Gliedes in Form eines sich in Längsrichtung des Kettengliedes erstreckenden Schlitzes, der sich gegen den unteren Rand der Seitenwand des Kettengliedes öffnet und eine Einführungsöffnung für den Kupplungszapfen bildet, ausgebildet sind. Die Kupplung kann bei dieser Konstruktion durch einfaches Einhaken des endständigen Kettengliedes in das Kupplungsstück erfolgen. Um ein unbeabsichtigtes Aushaken zu vermeiden, ist in Weiterbildung der Erfindung in eine der Wangen des Kupplungsstückes ein Sperrbolzen einschraubbar, der die Verschiebung des endständigen Kettengliedes entlang des Schlitzes begrenzt.

In einer Gleitschutzeinrichtung, bei der die Klemmbacken als zweiarmige Hebel ausgebildet sind und mittels einer mit zwei gegensinnigen Gewindeabschnitten versehenen, in einem quer über die Lauffläche des Reifens anordenbaren Träger vorgesehenen Schraubenspindel gegensinnig verschwenkbar sind, kann in besonderer Ausgestaltung der Erfindung vorgesehen sein, dass in jeden der gegensinnigen Gewindeabschnitte ein im Träger in Richtung der Schraubspindelachse verschiebbarer Schlitten eingreift, an welchem die Schwenkachse des jeweils als zweiarmiger Hebel ausgebildeten Backens gelagert ist und der jeweils einen Anschlag für den sich gegen die Schraubenspindel erstreckenden Hebelarm der Backen aufweist. Bei dieser Ausgestaltung der Erfindung ist sichergestellt, dass die Backen mit ihren kurzen Hebelarmen an dem Schlitten zur Anlage kommen, sobald die langen Hebelarme sich gegen die Reifenseitenwände abstützen. Zwecks Festklemmens der Backen an den Seitenwandungen des Reifens ist es dann nur mehr erforderlich, den Schlitten einzuziehen, d.h. gegen das Innere des Trägers zu bewegen. Solcherart wird vermieden, dass die freien Enden der zweiarmigen Hebel, welche die Backen darstellen, seitlich gegenüber den anderen Teilen der Gleitschutzvorrichtung vorspringen, wie dies etwa bei bekannten Konstruktionen (AT-A-346 196) auftreten kann, in welcher die Backen an einem Fortsatz des Trägers, also ortsfest angeordnet sind und zur Verschwenkung der Hebel gegeneinander zwecks Klemmung am Luftreifen, Druckstücke vorgesehen sind, die an den kurzen Hebelarmen angreifen und in welche die Schraubenspindel eingreift, so dass bei Drehen der Schraubenspindel die Druckstücke voneinander wegbewegt werden, wodurch die langen Arme der Backen gegen die Reifenwand gepresst werden. Die Schraubenspindel wird bei der bekannten Einrichtung hiebei unter Druck gesetzt. Dies stellt eine bei Schraubenspindeln nicht unbedingt erwünschte Beanspruchungsart dar, die durch die vorerwähnte erfindungsgemässe Ausbildung der Gleitschutzeinrichtung bedingt durch die Anordnung der Schwenklager und der Abstützung der Backen auf dem Schlitten vermieden wird.

Eine besonders einfache Ausbildung der Gleitschutzeinrichtung ergibt sich, wenn in Weiterbildung der Erfindung der Anschlag für den sich gegen die Schraubenspindel erstreckenden Hebelarm der Backen von einer Kante eines gegen die Achse der Schraubenspindel abgewinkelten Fortsatzes des Schlittens gebildet ist. Bei dieser Ausgestaltung des Erfindungsgegenstandes erübrigen sich gesonderte Vorkehrungen zur Bildung des Anschlages.

Während eines Umlaufes des Fahrzeugrades ändern sich bedingt durch die Walkarbeit Querschnittshöhe und auch die Querschnittsweite des Luftreifens, d.h. die Querschnittshöhe wird vermindert und die Querschnittsbreite nimmt zu. Durch die Änderung der Querschnittshöhe wandert bei der bekannten Gleitschutzeinrichtung die Klemmstelle der Backen entlang der Reifenwand und bewirkt an der relativ empfindlichen Reifenseitenwand eine Abnützung. Einer weiteren Ausgestaltung der Erfindung liegt nun das Problem zugrunde, auch diesem Mangel abzuhelfen. Zu diesem Zweck ist erfindungsgemäss vorgesehen, dass zumindest die sich von der Schwenkachse der Backen und von der Schraubenspindel weg erstreckende Arme der Backen federnd ausgebildet, insbesondere von einer Blattfeder gebildet sind, wobei die Weite des Spaltes zwischen der der Reifenwand zugekehrten Wandung des federnden Armes der Backen an zumindest einer zwischen dem freien Ende der federnden Stelle geringer ist als die dort auftretende Ausbeulung des Querschnittes des Reifens im Zuge der Walkbewegung. Die Reifenseitenwände werden bei Anwendung der erfindungsgemässen Gleitschutzvorrichtung geschont, weil durch die beim Walken auftretende Breitenzunahme die Seitenwand des Reifens an der Klemmbacke zur Anlage kommt, u.zw. an einer anderen Stelle als jener, an der die Klemmbacke bei nicht deformiertem Reifen zur Anlage kommt. Dadurch wird aber die Klemmbacke, da sie federnd ist, nach aussen bewegt und das freie Ende der federnden Klemmbacke kommt von der Seitenwand frei, und die Klemmbacke liegt dann an einer anderen Stelle an der Reifenseitenwand an. Beim Walken ist somit möglich, dass eine Scheuerbewegung zwischen Klemmbacke und Reifenseitenwand in Radialrichtung des Reifens vermieden wird.

Bei Gleitschutzvorrichtungen, bei der die Schraubenspindel zumindest an einem Ende mit einem Mehrkant, insbes. Vierkant, versehen ist zur Aufnahme eines Steckschlüssels, kann in besonders günstiger Weise eine Sicherung gegen unerwünschtes Drehen der Schraubenspindel im Betrieb dadurch erreicht werden, dass in Weiterbildung der erfindungsgemässen Gleitschutzvorrichtung am Schlitten eine gegebenenfalls von der Schraubenspindel durchsetzte Blattfeder angeordnet ist, die einen sich federnd gegen den Mehrkant der Schraubenspindel erstreckenden Abschnitt aufweist, der mit einer der Weite des Mehrkantes entsprechenden Ausnehmung versehen ist, wobei diese Ausnehmung den Mehrkant einschliesst und gegen Verdrehen sichert, sowie beim Einschieben des Betätigungsschlüssels durch dessen Aussenmantel ausser Eingriff mit dem Mehrkant schiebbar ist. Nach Abziehen des Steckschlüssels schnappt die Feder mit ihrer Ausnehmung in den Mehrkant der Schraubenspindel ein und hindert dadurch die Schraubenspindel an einer Drehung. Der Eingriff zwischen der Ausnehmung der Blattfeder und dem Mehrkant wird beim Aufschieben des Steckschlüssels gelöst, so dass mittels des Steckschlüssels die Gleitschutzeinrichtung gelöst werden kann.

Erfindungsgemässe Gleitschutzeinrichtungen werden vor allem zusammen mit sogenannten Laschenketten verwendet, wobei zur Halterung dieser Laschenkette am Umfang des Luftreifens mindestens eine klammerartige Gleitschutzeinrichtung vorgesehen ist.

Die Erfindung wird nachstehend anhand von in der Zeichnung dargestellten Ausführungsbeispielen näher erläutert. Es zeigen

Fig. 1 ein Detail der erfindungsgemässen Gleitschutzeinrichtung in einem Schnitt entlang der Linie I—I in

Fig. 2, die einen Schnitt entlang der Linie II—II in Fig. 1 veranschaulicht.

Fig. 3 eine Draufsicht auf ein in eine erfindungsgemässe Gleitschutzeinrichtung einbaubares Kupplungsstück,

Fig. 4 einen Schnitt entlang der Linie IV—IV in Fig. 3,

Fig. 5 ein Detail aus Fig. 4,

Fig. 6 einen zwei benachbarte Kettenglieder verbindenden Bolzen und

Fig. 7 in schaubildlicher Darstellung eine Anordnung zur Verlängerung einer Kette bei der Montage der Kette auf einen Reifen,

Fig. 8 ein gegenüber Fig. 1 modifiziertes Detail einer erfindungsgemässen Gleitschutzeinrichtung, in gleicher Darstellung wie in Fig. 1,

Fig. 9 ein Detail aus Fig. 8,

Fig. 10 eine gegenüber Fig. 9 modifizierte Lage, wie sie sich im Zuge der Walkbewegung des Luftreifens ergibt,

Fig. 11 eine Draufsicht auf einen Abschnitt einer bei der Gleitschutzeinrichtung anwendbaren Gliederkette,

Fig. 12 einen Schnitt entlang der Linie XII—XII in Fig. 11,

Fig. 13 eine Draufsicht auf eine erfindungsgemässe Gleitschutzeinrichtung, die mit einer Kupplungseinrichtung für den Anschluss der endständigen Glieder einer den Luftreifen umschliessenden Gliederkette ausgestattet ist,

Fig. 14 einen Schnitt entlang der Linie XIV—XIV in Fig. 13,

Fig. 15 ein Detail einer erfindungsgemässen Gleitschutzeinrichtung in einem Schnitt in Längsrichtung der Schraubenspindel,

Fig. 16 eine der Fig. 15 entsprechende Darstellung, jedoch in anderer Stellung und

Fig. 17 einen Schnitt entlang der Linie XVII—XVII in Fig. 15.

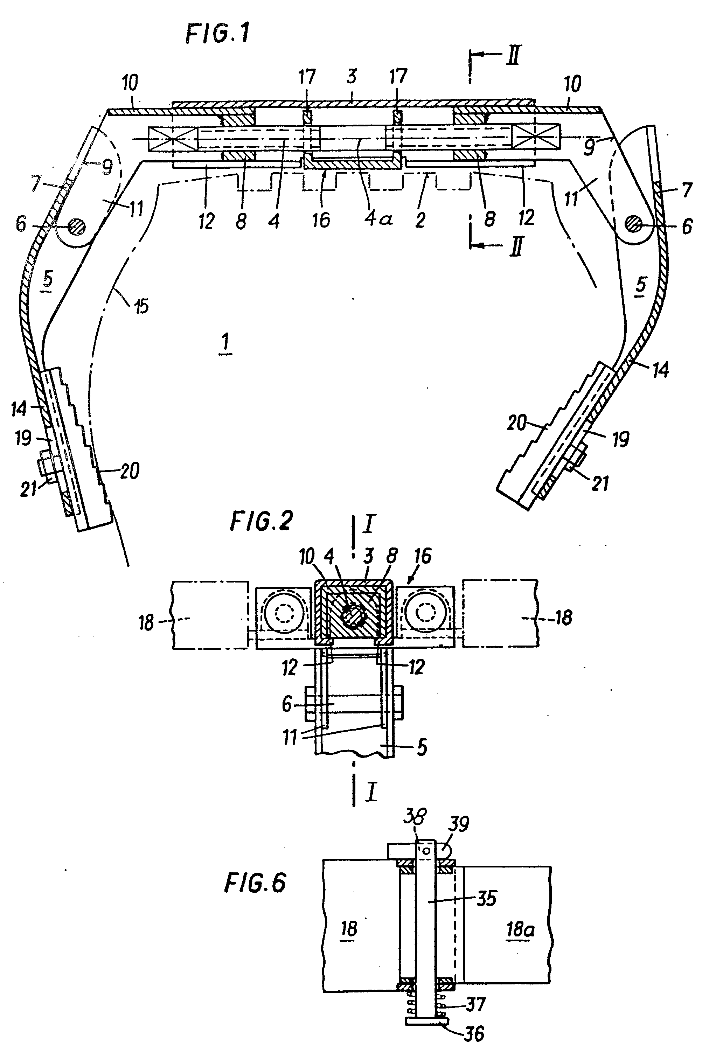

Die erfindungsgemässe Gleitschutzeinrichtung weist zwei an den Seitenwandungen 15 eines Fahrzeug(Luft)reifens 1 zur Anlage bringbare und mit Hilfe einer in einem quer über die Lauffläche 2 des Reifens verlaufenden Träger 3 angeordneten Schraubenspindel 4 an den Reifen festklemmbare Backen 5 auf. Diese Backen sind als zweiarmige Hebel ausgebildet. Der kürzere Hebelsarm ist hierbei mit 7 und der längere Hebelsarm bekannterweise mit 14 bezeichnet. Jeder Backen 5 ist um eine quer zur Achse 4a der Schraubenspindel 4 verlaufende Achse 6 schwenkbar. Der sich gegen die Schraubenspindel 4 erstreckende kürzere Hebelsarm 7 des Backens 5 ist hiebei gegen einen Anschlag abstützbar. Die Schraubenspindel 4 weist zwei gegensinnige Gewindeabschnitte auf, d.h. einen Gewindeabschnitt mit Rechtsgewinde und einen Gewindeabschnitt mit Linksgewinde, symmetrisch bezüglich der Mittelebene der Schraubenspindel 4. In jeden der Gewindeabschnitte greift hiebei eine Laufmutter 8 ein, die im Träger 3 in Richtung der Achse der Schraubenspindel 4 verschiebbar und an einem im Träger 3 verschiebbar geführten Schlitten 10 befestigt ist. Die Schwenkachse 6 der Backen 5 ist an einem Fortsatz 11 des Schlittens 10 tiefer als die Achse der Schraubenspindel 4 gelagert. An dem Schlitten 10 ist auch der Anschlag für den sich gegen die Schraubenspindelachse erstreckenden Hebelsarm 7 der Backen 5 vorgesehen. In den dargestellten Ausführungsbeispielen (Fig. 1 und 8) wird dieser Anschlag in einfacher Weise von der Aussenkante 9 des gegen die Achse 4a der Schraubenspindel 4 abgewinkelten Fortsatzes 11 des Schlittens 10 gebildet. Der Träger 3 weist, wie dies aus Fig. 2 ersichtlich ist, im wesentlichen U-förmigen Querschnitt auf. Die freien Enden der Flanschen des U-förmigen Querschnittes sind jedoch nach innen abgewinkelt und bilden Führungsleisten 12 für die Laufmutter 8 bzw. den Schlitten 10. Am Ende der langen Arme 14 der die Backen bildenden zweiarmigen Hebel sind bei dem Ausführungsbeispiel gemäss Fig. 1 mittels Schraubenmuttern 21 Druckstücke befestigt, die Zahnleisten 20 aufweisen. Die Druckstücke sind hiebei in Langlöchern 19 der langen Hebelarme 14 der Backen 5 verschiebbar und daher auf verschiedene Reifenhöhen einstellbar in dem Backen gelagert. Bei dem Ausführungsbeispiel gemäss Fig. 8 ist der längere Arm 14 der Backen 5 hingegen federnd ausgebildet. Im dargestellten Ausführungsbeispiel ist der Arm 14 von einer Blattfeder gebildet. Diese Blattfeder kann, wie dies in Fig. 8 links dargestellt ist, um 180° gebogen sein, wobei die Schwenkachse 6 in dem Raum zwischen den einander gegenüberliegenden, durch die Abbiegung entstehenden Federabschnitten liegt. Auf der rechten Seite der Fig. 1 ist ein Blattfederpaket dargestellt, das im kürzeren Hebelsarm 7 durch einen Niet befestigt ist. Wesentlich ist es nun, dass die Weite s des Spaltes 41 zwischen der der Reifenwand 15 zugekehrten Wandung 42 des federnden Armes 14 der Backen 5 an zumindest einer zwischen dem freien Ende der federnden Backen und der Schwenkachse 6 der Backen 5 liegenden Stelle geringer ist als die dort auftretende Ausbeulung des Reifenquerschnittes im Zuge der Walkbewegung. Beim Walken im Zuge der Drehung des belasteten Reifens kommt dadurch die Reifenwand 15 an der Wandung 42 des federnden Armes 14 an einer Stelle, die zwischen dem freien Ende und der Schwenkachse 6 der Backen 5 liegt, zur Anlage und wird dabei den Backen um die Schenkachse 6 nach aussen verschwenken, wodurch das freie Ende des federnden Armes 14 der Backen 5 von der Reifenseitenwand 15 abgehoben wird und keine Scheuerbewegung mehr ausführen kann. Dies ist wesentlich, weil dadurch eine Beschädigung der Reifenseitenwand durch Gleiten an den Backen 5 bei fortgesetztem Gebrauch der Gleitschutzeinrichtung sicher ausgeschaltet wird.

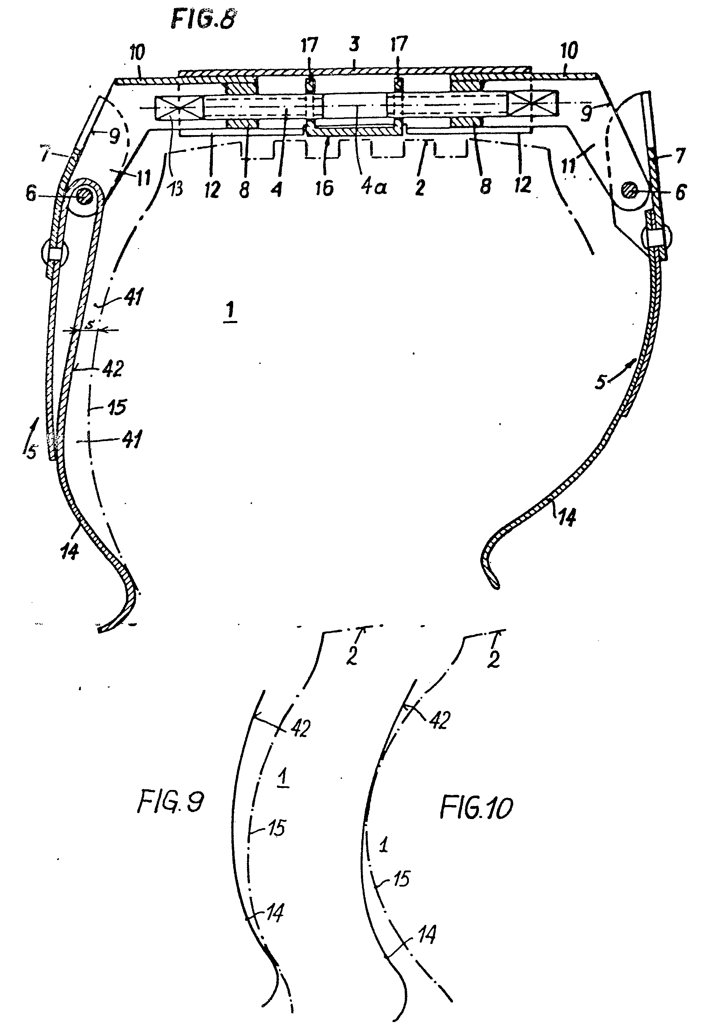

Aus den Fig. 9 und 10 sind die Verhältnisse, wie sie sich beim Walken darstellen, ersichtlich, u. zw. zeigt Fig. 9 den Reifenquerschnitt im unbelasteten Zustand, wogegen Fig. 10 den durch die Walkbewegung deformierten Reifenquerschnitt veranschaulicht. Es ist deutlich zu ersehen, in welcher Weise durch das Walken des Reifens bei Einhaltung der vorgegebenen Bedingung für die Spaltweite zwischen der Reifenseitenwand 15 und der Wandung 42 des federnden Armes das freie Ende des federnden Backenarmes 14 abgehoben wird.

Auf der rechten Seite der Fig. 1 und 8 ist der Backen 5 in etwas eingeschwenkter Lage gezeichnet, um zu veranschaulichen, dass der kurze Hebelarm 7 von der den Anschlag bildenden Kante 9 des Fortsatzes 11 des Schlittens 10 angehoben ist.

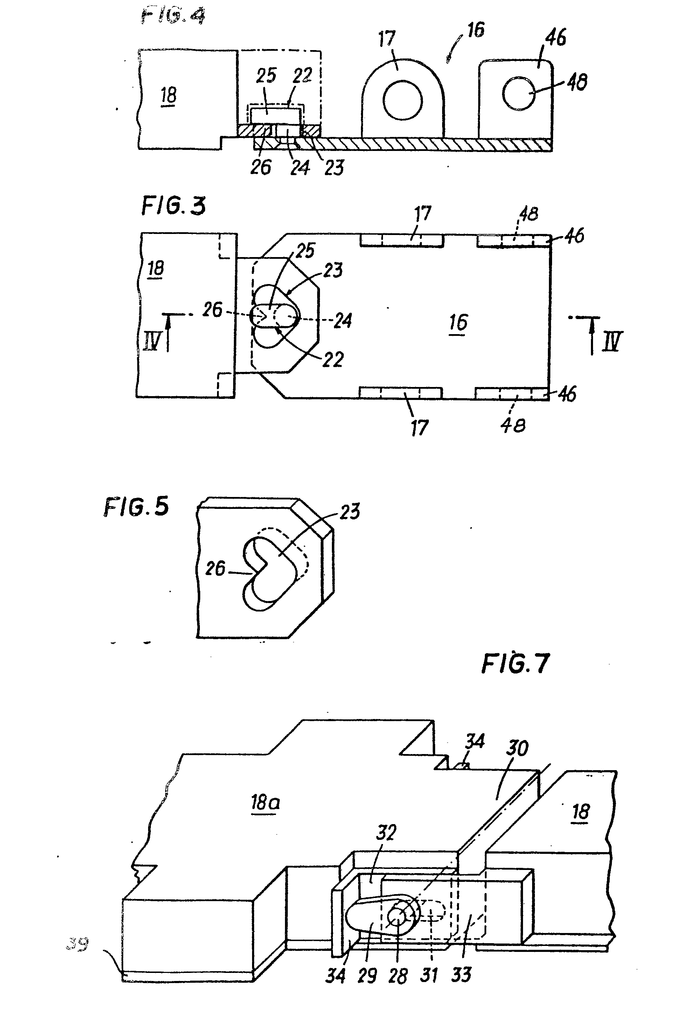

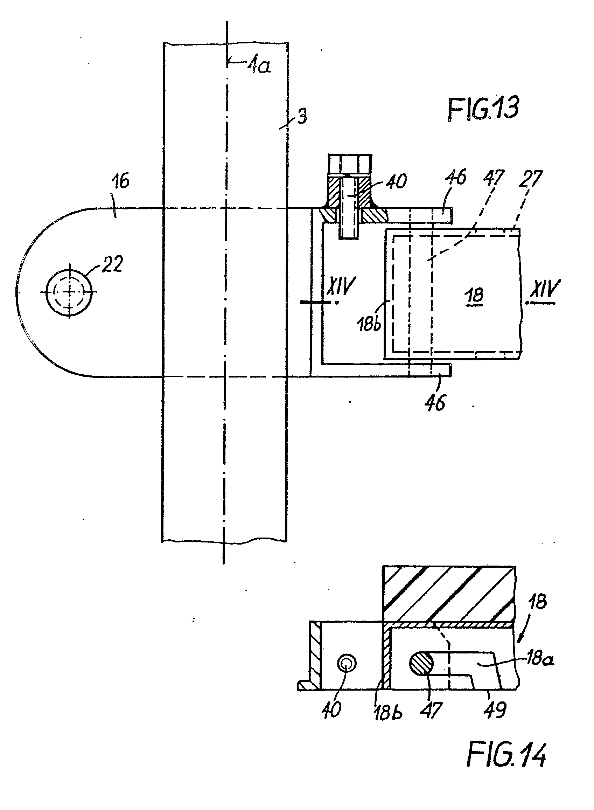

Mit der Schraubenspindel 4 und damit mit dem Träger 3 der Gleitschutzeinrichtung ist ein Kupplungsstück 16 für den Anschluss von Kettengliedern verbunden (Fig. 1–5, 13). Die endständigen Kettenglieder sind hiebei in den Fig. 2 sowie 4 und 13 jeweils mit 18 bezeichnet. Ein Kettenglied ist in Fig. 7 in schaubildlicher Darstellung teilweise wiedergegeben und weist im wesentlichen kreuzförmigen Querschnitt auf. In Fig. 7 ist ein solches Kettenglied mit 18a bezeichnet. Zur Halterung des Kupplungsstückes 16 an der Schraubenspindel 4 sind Laschen 17, Hülsen od. dgl. am Kupplungsstück 16 vorgesehen, die eine Bohrung aufweisen, welche von der Schraubenspindel 4 durchsetzt ist. In analoger Weise ist das in Fig. 13 dargestellte Kupplungsstück 16 mit dem Träger 3 verbunden. Gemäss der Fig. 3 und 4 trägt das Kupplungsstück 16 einen Kupplungszapfen 22 eines Bajonettverschlusses. Die mit diesem Kupplungszapfen 22 zusammenwirkende Ausnehmung 23 ist hiebei im endständigen Glied 18 der Gleitschutzkette angeordnet (Fig. 3–5). Der Kupplungszapfen 22 besitzt hiebei einen Nocken, der an der Stirnfläche eines am Kupplungsstück 16 fixierten Bolzens 24 befestigt ist, insbesondere mit diesem aus einem Stück besteht. Wie etwa aus Fig. 3 ersichtlich ist, weist dieser Nocken 25 im wesentlichen zwei parallele Längsränder auf, die durch Halbkreise an ihren Enden miteinander verbunden sind. Die Ausnehmung 23 im endständigen Glied 18 der Kette ist hiebei, wie dies insbes. die Fig. 5 in schaubildlicher Darstellung zeigt, herzförmig gestaltet. Der Nocken ist hiebei in die Ausnehmung einschiebbar, u. zw. in einer Lage, in der eine Seitenkante des Nockens 25 mit einer Seitenwand der herzförmigen Ausnehmung 23 fluchtet. Durch Drehen des endständigen Kettengliedes um die Achse des Bolzens 24 wird eine Stellung erreicht, in der der Nocken 25 vor dem einspringenden Abschnitt 26 der Seitenkanten der herzförmigen Ausnehmung liegt. Dieser einspringende Abschnitt 26 verhindert ein Heraustreten des Nockens aus der herzförmigen Ausnehmung. Das Kupplungsstück 16 weist weiters an seinen Längswänden Laschen 46 mit einer Bohrung 48 auf, durch welche ein Querbolzen hindurchgeschoben werden kann, der das zweite endständige Kettenglied mit dem Kupplungsstück 16 verbindet. Aus den Fig. 13 und 14 ist eine besonders zweckmässige Ausführungsform einer solchen Verbindung mehr im Detail ersichtlich. Der Bolzen 47 ist hiebei an den Wangen 46 des Kupplungsstückes befestigt und erstreckt sich parallel zur Achse 4a der Schraubspindel 4. Mit diesem Bolzen 47 wird das Glied 18 der Kette verhakt, wie dies aus Fig. 14 ersichtlich ist. Dieses endständige Glied 18 weist hiebei Seitenwangen 27 auf, in welchen ein sich in Längsrichtung des Kettengliedes erstreckender Schlitz 18a vorgesehen ist, der sich gegen den unteren Rand 49 der Seitenwand des Kettengliedes 18 öffnet. Hiedurch entsteht eine Einführungsöffnung für den Bolzen 47. Um zu verhindern, dass die Verhakung des Kettengliedes 18 mit dem Bolzen 47 im Betrieb gelöst wird, dadurch, dass sich das Kettenglied 18 in Richtung auf den Träger 3 der Backen 5 bewegt, ist vor einer sich zwischen den Seitenwangen 27 erstreckenden Stirnwand 18b des Kettengliedes 18 ein in eine Seitenwange 46 des Kupplungsstückes 16 einschraubbarer, mit der Stirnwand 18b zusammenwirkender Sperrbolzen 40 angeordnet. Um die Verhakung des Kettengliedes 18 am Bolzen 47 zu lösen, ist daher zunächst der Sperrbolzen 40 so weit zurückzuschrauben, dass er nicht mehr in den Raum zwischen den Wangen 46 des Kupplungsstückes 16 hineinragt. Zur Verbindung des am zweiten Ende der Kette befindlichen Kettengliedes mit dem Kupplungsstück 16 ist an diesem der Kupplungszapfen 22 mit verbreitertem Kopf vorgesehen. Auf diesen Kupplungszapfen ist eine langlochartige Aussparung, die im Boden des endständigen Gliedes der Gleitschutzkette angeordnet ist, aufschiebbar. Die langlochartige Aussparung ist hiebei so ausgestaltet, dass sie an einem Ende eine Erweiterung aufweist, die dem Durchmesser des Kopfes entspricht, wobei an diese Erweiterung ein Längsschlitz anschliesst, dessen Weite dem Zapfendurchmesser unterhalb des Kopfes des Kupplungszapfens 22 entspricht. Selbstverständlich können die in den Fig. 3 bis 5 einerseits und 13 sowie 14 anderseits gezeigten Verbindungseinrichtungen der endständigen Kettenglieder mit dem Kupplungsstück 16 untereinander vertauscht werden, d.h. bei der Ausführungsform gemäss Fig. 13 kann statt des Kupplungszapfens 22 mit verbreitertem Kopf ein Bajonettverschluss gemäss den Fig. 3 bis 5 und umgekehrt verwendet werden. Desgleichen kann die aus den Fig. 13 und 14 ersichtliche Verhakung des endständigen Kettengliedes mit dem Kupplungsstück 16 auch bei einem Kupplungsstück gemäss den Fig. 3 bis 5 angewendet werden.

In Fig. 6 ist eine Verbindung zweier Kettenglieder 18a gezeigt. Die Kettenglieder besitzen hiebei an ihren Enden Laschen, durch die ein Schwenkzapfen 35 hindurchgesteckt ist. Der Schwenkzapfen 35 trägt an seinem einen Ende einen Kopf 36, der als Widerlager für eine Feder 37 dient, die sich gegen das benachbarte Kettenglied 18a seitlich abstützt. An dem dem Kopf 36 gegenüberliegenden Ende ist der Schwenkzapfen 35 geschlitzt. In dem Schlitz 38 ist eine Lasche 39 gelagert, die aus einer Stellung in der ihre Längsachse mit der Achse des Schwenkzapfens 35 fluchtet, in eine Stellung schwenkbar ist, in der die Längsachse der Lasche 39 quer zur Längsachse des Schwenkzapfens 35 verläuft. Solcherart ist der Schwenkzapfen 35 an einem Herausfallen aus den Haltebohrungen in den jeweils endständigen Kettengliedern 18a gehindert.

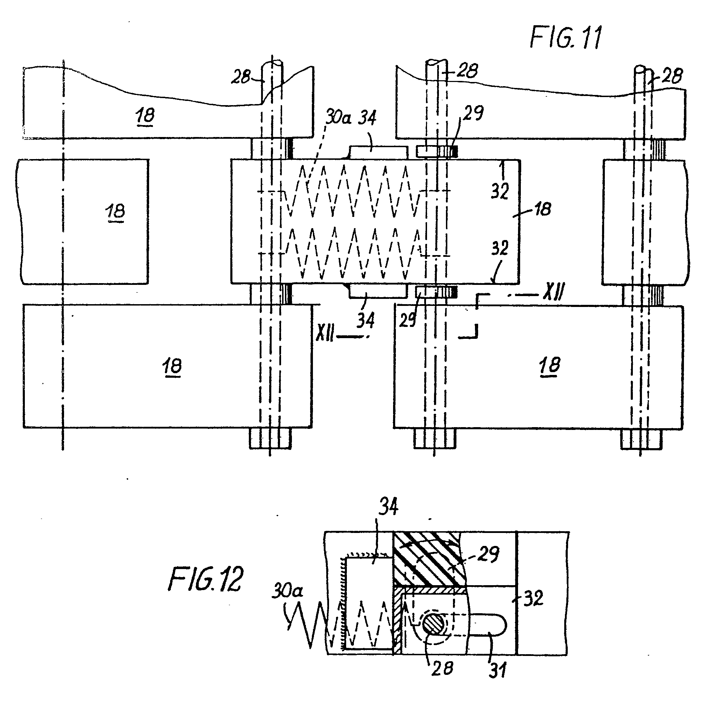

Um die Kette für das Auf- und Abmontieren verlängern zu können, wird zweckmässig eine Einrichtung gemäss den Fig. 7 bzw. 11 und 12 angewendet. Benachbarte Kettenglieder sind hiebei durch einen Querbolzen 28 verbunden, der mit Exzentern 29 versehen ist, die mit Anschlägen 34 zusammenwirken, um den Abstand benachbarter Kettenglieder zu verändern. Gemäss Fig. 7 durchsetzt der Bolzen 28 spielfrei einen aus elastischem Material bestehenden Abschnitt 30 der Gleitschutzkette. Gemäss Fig. 11 wirken auf den Bolzen 28 zwei Federn 30a, die bestrebt sind, die Exzenter 29 gegen die Anschläge 34 zu bewegen. Der Bolzen 28 durchsetzt Langlöcher 31, die sich in den Seitenteilen 32 des den elastischen Abschnitt 30 bzw. des mit den Federn 30a ausgestatteten Kettengliedes befinden. Das benachbarte Kettenglied ist mit dem Bolzen 28 spielfrei verbunden. Im Falle der Fig. 7 durchsetzt der Bolzen 28 hiebei spielfrei eine Bohrung in einer Kupplungsleiste 33, welche vom benachbarten Kettenglied absteht. Durch Schwenken des Exzenters 29 kann der Abstand des einen Kettengliedes von seinem benachbarten Kettenglied verändert werden. In Fig. 7 ist eine Lage gezeichnet, in der die beiden Kettenglieder den grösstmöglichen Abstand voneinander aufweisen. Wird der Exzenter 29 etwa um 90° aus der in Fig. 7 gezeichneten Lage verdreht, so wird sich der Querbolzen 28 in Folge der Elastizität des Abschnittes 30 des Kettengliedes dem Vorsprung 34 annähern und sich dabei im Langloch 31 verschieben. Die Entfernung der beiden benachbarten Kettenglieder verkleinert sich hiebei. Mit 39 ist in Fig. 7 eine Bodenplatte bezeichnet, auf welche der elastische, die Lauffläche tragende Körper befestigt, bevorzugt aufvulkanisiert ist. Die Bodenplatte 39 kann mit den Vorsprüngen 34 bzw. den Seitenteilen 32 fest verbunden sein und besteht bevorzugt mit diesen aus einem Stück. Bei der Ausführungsform gemäss Fig. 11 sind die Federn 30a geschützt in dem schachtelartig ausgebildeten Kettenglied 18 angeordnet. In Fig. 12 ist die Schwenkrichtung des Exzenters 29 mit Pfeilen eingezeichnet. Erfolgt die Verschwenkung des Exzenters 29 in Fig. 12 entgegen dem Drehsinn des Uhrzeigers, so wird die Länge der Kette vergrössert und die endständigen Kettenglieder können dann einfach und problemlos mit dem Bolzen 47 bzw. dem Kupplungszapfen 22 in Eingriff gebracht werden (Fig. 13, 14).

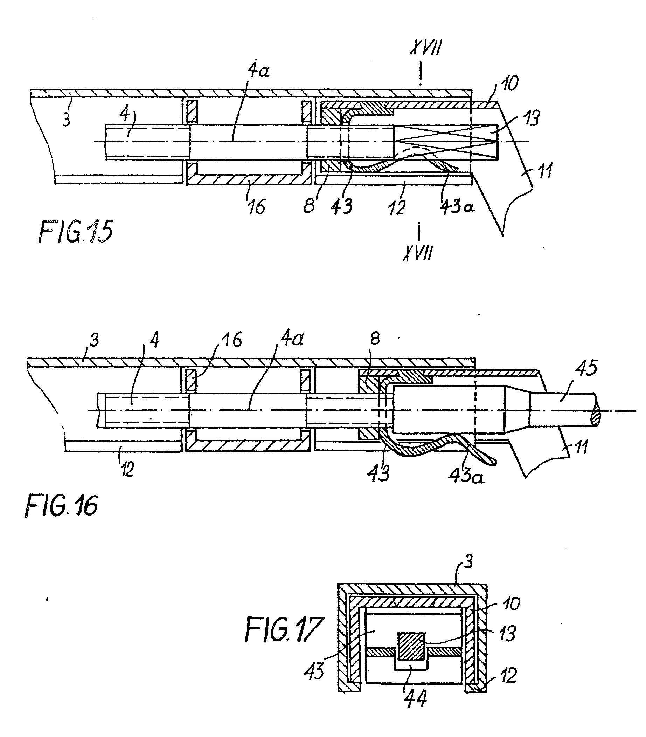

Zur Betätigung kann die Schraubenspindel 4 an ihren Enden je mit einem Schlitz oder einem Innensechskant versehen sein, um einen Imbus-Schlüssel aufzunehmen oder durch einen Schraubendreher verschwenkt zu werden, beim dargestellten Ausführungsbeispiel ist die Schraubspindel 4 jedoch mit einem Vierkant 13 zur Aufnahme eines Steckschlüssels versehen. Eine Sicherung der Schraubspindel gegen Verdrehen ist in den Fig. 15–17 veranschaulicht. Hiebei ist im Schlitten 10 eine Blattfeder 43 befestigt, die im dargestellten Ausführungsbeispiel von der Schraubenspindel 4 durchsetzt wird, jedoch auch am Träger 3 befestigt sein könnte. Die Blattfeder 43 besitzt einen Abschnitt 43a, der sich federnd gegen den Vierkant 13 der Schraubenspindel 4 erstreckt. Dieser Abschnitt 43a ist, wie insbes. aus Fig. 15 deutlich zu ersehen ist, mit einer Ausnehmung 44 versehen, deren Weite dem Abstand der zueinander parallelen Flächen des Vierkants entspricht. Ist der Schlüssel 45 abgezogen, wie dies im Betriebszustand der Gleitschutzvorrichtung der Fall ist, so greift der Vierkant 13 automatisch in die Ausnehmung 44 des Abschnittes 43a ein und wird solcherart gegen Drehen gesichert. Wird jedoch der Betätigungsschlüssel 45 auf den Vierkant 13 aufgeschoben, so wird durch den Aussenmantel des Schlüssels 45 der Abschnitt 43a von der Schraubenspindel 4 wegbewegt und der Eingriff des Vierkants 13 in die Ausnehmung 44 gelöst, so dass die Gleitschutzeinrichtung durch Drehen der Schraubenspindel entweder auf dem Reifen 1 festgeklemmt werden kann oder aber die Klemmung gelöst wird.

**Patentansprüche**

1. Gleitschutzeinrichtung für Fahrzeugreifen (1) mit einer aus schwenkbar miteinander verbundenen Gliedern (18) bestehenden Kette, die im montierten Zustand mindestens einen Teilbereich des Reifenumfanges umfasst und bevorzugt mittels Klemmbacken (5), die insbes. gegen die Seitenwände (15) des Reifens (1) abstützbar sind, am Fahrzeugreifen (1) fixierbar ist, wobei die Kette in Richtung ihrer Längserstreckung elastisch verlängerbar ist, wobei ein Gummipuffer bei 30 an einem der die einzelnen Glieder der Gleitschutzkette miteinander verbindenden Querbolzen (28) angreift, der sich in Längsrichtung der Kette erstreckende Langlöcher (31) des den Gummipuffer und ein einer Kettenlängung dienendes elastisches Glied aufweisenden Kettengliedes (18a) durchsetzt und im wesentlichen spielfrei in am benachbarten Kettenglied (18) angeordnete Bohrungen eingreift, wobei der Querbolzen (28) mit Exzentern (29) versehen ist, die mit Anschlägen (34) an den Kettengliedern zusammenwirken, dadurch gekennzeichnet, dass der Querbolzen (28) spielfrei den Gummipuffer bei 30 durchsetzt der das zur Kettenlängung dienende Glied bildet (Fig. 7).

2. Gleitschutzeinrichtung nach Anspruch 1, bei der die endständigen Glieder (18) der Gleitschutzkette Ausnehmungen (23) aufweisen, die lösbar mit Kupplungszapfen (22) verbindbar sind, die an einem Kupplungsstück (16) vorgesehen sind, das an einem Träger (3) der Klemmbacken (5) angelenkt ist, dadurch gekennzeichnet, dass die Ausnehmung (23) am endständigen Glied (18) der Gleitschutzkette und der damit zusammenwirkende Kupplungszapfen (22) am Kupplungsstück (16) Elemente eines Bajonettverschlusses bilden (Fig. 3–5).

3. Gleitschutzeinrichtung nach Anspruch 1, dadurch gekennzeichnet, dass der Gummipuffer von einem die Lauffläche (2) aufweisenden Abschnitt (30) der Gleitschutzkette gebildet ist.

4. Gleitschutzeinrichtung nach Anspruch 2 oder in Verbindung mit einer Gleitschutzvorrichtung der in Anspruch 1 und 2 beschriebenen Art, bei der anstelle eines Gummipuffers eine Zugfederspannvorrichtung (30a) innerhalb eines schachtelartig ausgebildeten Kettengliedes (18) angeordnet ist, dadurch gekennzeichnet, dass der Kupplungszapfen (22) einen an der Stirnfläche des am Kupplungsstück (16) fixierten Bolzens (24) befestigten Nocken (25) aufweist, der in die herzförmig gestaltete Ausnehmung (23) im endständigen Glied (18) der Kette einschiebbar und durch Drehen um die Achse seines Bolzens (24) vor den einspringenden Abschnitt (26) der herzförmigen Ausnehmung (23) schwenkbar ist (Fig. 3–5).

5. Gleitschutzeinrichtung nach Anspruch 1 oder 3, bei der die endständigen Glieder (18) der Gleitschutzkette Ausnehmungen aufweisen, die lösbar mit Kupplungszapfen (47) verbindbar sind, die an einem Kupplungsstück (16) vorgesehen sind, das an einem Träger (3) der Klemmbacken (5) angelenkt ist, dadurch gekennzeichnet, dass der Kupplungszapfen (47) quer zur Längsrichtung der Gleitschutzkette zwischen zwei Wangen (46) des Kupplungsstückes (16) angeordnet ist und dass die Ausnehmungen in dem endständigen Glied (18) der Gleitschutzkette in zwei einander gegenüberliegenden Seitenwangen (27) dieses Gliedes (18) in Form eines sich in Längsrichtung des Kettengliedes erstreckenden Schlitzes (18a), der sich gegen den unteren Rand der Seitenwange (27) des Kettengliedes (18) öffnet und eine Einführungsöffnung (49) für den Kupplungszapfen (47) bildet, ausgebildet sind (Fig. 13, 14).

6. Gleitschutzeinrichtung nach Anspruch 5, dadurch gekennzeichnet, dass in eine der Wangen (46) des Kupplungsstückes (16) ein Sperrbolzen (40) einschraubbar ist, der die Verschiebung des endständigen Kettengliedes (18) entlang des Schlitzes (18a) begrenzt (Fig. 13).

7. Gleitschutzeinrichtung nach einem der Ansprüche 1 bis 6, bei der die Klemmbacken (5) als zweiarmige Hebel (7, 14) ausgebildet sind und mittels einer mit zwei gegensinnigen Gewindeabschnitten versehenen, in einem quer über die Lauffläche (2) des Reifens (1) anordenbaren Träger (3) vorgesehenen Schraubenspindel (4) gegensinnig verschwenkbar sind, dadurch gekennzeichnet, dass in jeden der gegensinnigen Gewindeabschnitte ein im Träger (3) in Richtung der Schraubspindelachse (4a) verschiebbarer Schlitten (10) eingreift, an welchem die Schwenkachse (6) des jeweils als zweiarmiger Hebel ausgebildeten Backens (5) gelagert ist und der jeweils einen Anschlag für den sich gegen die Schraubenspindel (4) erstreckenden Hebelarm (7) der Backen (5) aufweist (Fig. 1, 2, 8).

8. Gleitschutzeinrichtung nach Anspruch 7, dadurch gekennzeichnet, dass der Anschlag für den sich gegen die Schraubenspindel (4) erstreckenden Hebelarm (7) der Backen (5) von einer Kante (9) eines gegen die Achse (4a) der Schraubenspindel abgewinkelten Fortsatzes des Schlittens (10) gebildet ist (Fig. 1, 2, 8).

9. Gleitschutzeinrichtung nach Anspruch 8, dadurch gekennzeichnet, dass der abgewinkelte Fortsatz des Schlittens (10) im Bereich seines Endes die Lagerstelle der Schwenkachse (6) für die Backen (5) aufweist (Fig. 1, 2, 8).

10. Gleitschutzeinrichtung nach einem der Ansprüche 7 bis 9, dadurch gekennzeichnet, dass zumindest die sich von der Schwenkachse (6) der Backe (5) und von der Schraubenspindel (4) weg erstreckenden Arme (14) der Backen (5) federnd ausgebildet, insbesondere von einer Blattfeder gebildet sind, wobei die Weite des Spaltes (41) zwischen der der Reifenwand (15) zugekehrten Wandung (42) des federnden Armes (14) der Backen (5) an zumindest einer zwischen dem freien Ende der federnden Backen (5) und der Schwenkachse (6) der Backen (5) liegenden Stelle geringer ist als die dort auftretende Ausbeulung des Querschnittes des Reifens (1) im Zuge der Walkbewegung (Fig. 8–10).

11. Gleitschutzeinrichtung nach einem der Ansprüche 7 bis 10, bei der die Schraubenspindel (4) zumindest an einem Ende mit einem Mehrkant (13), insbes. Vierkant, versehen ist zur Aufnahme eines Steckschlüssels (45), dadurch gekennzeichnet, dass am Schlitten (10) eine von der Schraubenspindel (4) durchsetzte Blattfeder (43) angeordnet ist, die einen sich federnd gegen den Mehrkant (13) der Schraubenspindel (4) erstreckenden Abschnitt (43a) aufweist, der mit einer der Weite des Mehrkantes (13) entsprechenden Ausnehmung (44) versehen ist, wobei die Ausnehmung (44) den Mehrkant (13) einschliesst und gegen Verdrehen sichert, jedoch beim Aufschieben des Betätigungsschlüssels (45) auf den Mehrkant (13) mittels des Aussenmantels des Betätigungsschlüssels ausser Eingriff mit dem Mehrkant (13) schiebbar ist (Fig. 15–17).

## Claims

1. Non-skid device for vehicle tires (1) comprising a chain composed of links (18) pivotably connected to one another, said chain in the mounted state enclosing at least a partial area of the circumference of the tire and preferably being attachable to the vehicle tire (1) by means of clamping jaws (5) supportable in particular against the lateral walls (15) of the tire (1), the chain being elastically extendable in the direction of its longitudinal extension, with a rubber buffer engaging (at 30) a cross pin (28) connecting the individual links of the non-skid chain to one another, said pin (28) piercing oblong holes (31) extending in the longitudial direction of the chain of the chain link (18a) comprising the rubber buffer and an elastic link serving for the extension of the chain, said pin (28) engaging, essentially without clearance, bores provided on the adjacent chain link (18), the cross pin (28) being provided with excenters (29) cooperating with stops (34) provided on the chain links, characterized in that the cross pin (28) pierces the rubber buffer (at 30) without clearance, said rubber buffer forming the link serving for the extension of the chain (Fig. 7).

2. Non-skid device according to claim 1, with the terminal links (18) of the non-skid chain being provided with recesses (23) releasably connectable with coupling pins (22) provided on a coupling element (16) articulated to a support (3) of the clamping jaws (5), therein characterized that the recess (23) of the terminal link (18) of the non-skid chain and the coupling pin (22) cooperating therewith form the elements of a bayonet joint on the coupling element (16) (Fig. 3–5).

3. Non-skid device according to claim 1, therein characterized that the rubber buffer is formed by a portion (30) bearing the tread (2) of the non-skid chain.

4. Non-skid device according to claim 2 or in combination with a non-skid device of the type described in claim 1 and 2, in which a tension spring traction device (30a) is provided within a box-shaped chain link (18) instead of the rubber buffer, characterized therein that the coupling pin (22) comprises a cam (25) attached to the front face of the bolt (24) fixed to the coupling element (16), the cam (25) being retractable into the heart-shaped recess (23) in the terminal link (18) of the chain and pivotable in front of the recessed portion (26) of the heart-shaped recess (23) by rotation around the axis of its bolt (24) (Fig. 3–5).

5. Non-skid device according to claim 1 or 3, the terminal links (18) of the non-skid chain being provided with recesses which are releasably connectable with coupling pins (47) provided on a coupling element (16) articulated to a support (3) of the clamping jaws (5), characterized therein that the coupling pin (47) is arranged transversally in relation to the longitudinal direction of the non-skid chain between two cheeks (46) of the coupling element (16) and the recesses in the terminal link (18) of the non-skid chain are formed in two opposing lateral cheeks (27) of this link (18) in the shape of a slot (18a) extending in the longitudinal direction of the chain link, opening towards the lower rim of the lateral cheek (27) of the chain link and forming an inlet opening (49) for the coupling pin (47) (Fig. 13, 14).

6. Non-skid device according to claim 5, characterized therein that a locking pin (40) is screwable into one of the cheeks (46) of the coupling element (16), said pin (40) limiting the displacement of the terminal link (18) along the slot (18a) (Fig. 13).

7. Non-skid device according to any one of the claims 1 to 6, the clamping jaws (5) being in the form of two-armed levers (7, 14) and pivotable in an opposite direction by means of a screw spindle (4) having two opposingly directed thread portions and arranged in a suppot (3) arrangeable across the tread (2) of the tire (1), therein characterized that a slide (10) displaceable in the support (3) in the direction of the screw spindle axis (4a) engages each of the opposingly directed thread portions, which slide (10) carries the rotating axis (6) of the respective jaw (5) having the form of a two-armed lever, said slide being provided with one each stop for the lever arm (7) of the jaws (5) extending towards the screw spindle (4) (Fig. 1, 2, 8).

8. Non-skid device according to claim 7, therein characterized that the stop of the lever arm (7) extending towards the screw spindle (4) is formed by an edge (9) of an extension of the slide (10), said extension being inclined towards the axis (4a) of the screw spindle (Fig. 1, 2, 8).

9. Non-skid device according to claim 8, therein characterized that the inclined extension of the slide (10) comprises the bearing of the rotating axis (6) for the jaws (5) within the region of its end (Fig. 1, 2, 8).

10. Non-skin device according to any one of the claims 7 to 9, therein characterized that at least those arms (14) of the jaws extending away from the axis of rotation (6) of the jaw (5) and from the screw spindle (4) are formed elastically, in particular as a leaf spring, the widths of the gap (41) between that wall (42) of the elastic arm (14) of the jaws (5) facing the tire wall (15) being less in at least one spot positioned between the free end of the elastic jaws (5) and the axis of rotation (6) of the jaws (5) than the bulge of the cross section of the tire (1) occuring there in the course of the flexing motion (Fig. 8–10).

11. Non-skid device according to any one of the claims 7 to 10, the screw spindle being provided at least on one end with a multiple cornered part (13), in particular a square, for receiving a wrench (45), therein characterized that a leaf spring (43) pierced by the screw spindle (4) is arranged on the slide (10), said leaf spring (43) comprising a portion (43a) elastically extending towards the multiple cornered part (13) of the screw spindle (4), the portion (43a) being provided with a recess (44) corresponding to the width of the multiple cornered part (13), the recess (44) locking the multiple cornered part (13) and blocking it against rotation, but being slidable out of engagement with the multiple cornered part (13) on application of the actuating wrench (45) onto the multiple cornered part (13) by means of the outer shell of the actuating wrench (Fig. 15–17).

## Revendications

1. Dispositif antidérapant pour pneus (1) de véhicule comportant und chaîne de membres (18) liés l'un a l'autre de manière pivotable, la chaîne en état monté entourant au moins une zone partielle de la périphérie du pneu et apte à être attachée au pneu (1) du véhicule, de préférence, au moyen de mâchoires (5) prenant appui, en particulier, contre les parois latérales du pneu (1), la chaîne étant apte à être élastiquement allongée dans la direction de son étendue longitudinale, un tampon en caoutchouc mordant (sur 30) un boulon transversal (28) liant les membres individuels de la chaîne antidérapante, le boulon (28) transversant des trous oblongs (31) s'étendant en direction longitudinale de la chaîne du chaînon (18a) portant le tampon en caoutchouc et un chaînon élastique servant comme allongement de la chaîne et s'engrenant essentiellement sans jeu dans des alésages prévus sur le chaînon avoisinant, le boulon transversal (28) étant pourvu d'excentriques (29) coopérant avec des butées (34) sur les chaînons, caractérisé en ce que le boulon transversal (28) traverse (en 30) sans jeu le tampon en caoutchouc servant comme membre d'allongement de la chaîne (Fig. 7).

2. Dispositif antidérapant selon la revendication 1, dans lequel les membres (18) terminaux de la chaîne antidérapante comportent des évidements (23) aptes à être liés de façon amovible à des boulons d'attelage (22) pourvus sur une pièce d'accouplement (16) articulée sur un support (3) des mâchoires (5), caractérisé en ce que l'évidement (23) sur le membre (18) terminal de la chaîne antidérapante et le boulon d'attelage en coopérant forment les éléments d'une fermeture à baïonnette sur la pièce d'accouplement (16) (Fig. 3 à 5).

3. Dispositif antidérapant selon la revendication 1, caractérisé en ce que le tampon en caoutchouc est formé par une zone (30) de la chaîne antidérapante comportant la surface de roulement (2).

4. Dispositif antidérapant selon la revendication 2 ou en combinaison avec un dispositif antidérapant du type décrit dans les revendications 1 et 2, comportant au lieu du tampon en caoutchouc un dispositif de serrage (30a) à ressort de traction disposé dans un chaînon formé en boîte (18), caractérisé en ce que le boulon d'attelage (22) comporte une came (25) fixée à la face frontale du boulon (24) attaché à la piece d'accouplement, la came (25) étant apte à être insérée dans l'évidement en forme de cœur (23) dans le membre terminal (18) de la chaîne et pivotable vers l'avant de la zone (26) en retrait de l'évidement (23) en forme de cœur par basculement autour de l'axe de son boulon (24) (Fig. 3 à 5).

5. Dispositif antidérapant selon revendication 1 ou 3, les membres (18) terminaux de la chaîne antidérapante comportant des évidements aptes à être liés de façon amovible à des boulons d'attelage (47) pourvus sur une pièce d'accouplement (16) articulée sur un support (3) des máchoires (5), caractérisé en ce que le boulon (47) d'attelage est disposé transversalement par rapport à la direction longitudinale de la chaîne antidérapante entre deux faces (46) de la pièce d'accouplement (16) et que les évidements dans le membre (18) terminal de la chaîne antidérapante sont aménagés dans deux faces latérales (27) opposées dudit membre (18) en forme d'une fente (18a) s'étendant en direction longitudinale du chaînon, la fente (18a) s'ouvrant vers le bord inférieur de la face latérale (27) du chaînon (18) et formant un orifice d'entrée (49) pour le boulon d'attelage (47) (Fig. 13, 14).

6. Dispositif antidérapant selon la revendication 5, caractérisé en ce qu'on boulon de blocage (40) limitant le déplacement du chaînon terminal (18) le long de la fente (18a) est vissable dans une des faces (46) de la pièce d'accouplement (16) (Fig. 13).

7. Dispositif antidérapant selon une des revendications 1 à 6, comportant des mâchoires (5) en forme de leviers doubles (7, 14) pivotables en sens inverse au moyen d'une tige filetée (4) pourvue de deux zones filetées inverses et disposée dans un support (3) apte à être arrangé a travers de la surface de roulement (2) du pneu (1), caractérisé en ce qu'un coulisseau (10) deplaceable en sens de l'axe (4a) de la tige filetée dans le support (3) s'engrène dans chacune des zones filetées inverses, le coulisseau (10) supportant l'axe de rotation (6) de la mâchoire (5) en forme de levier double et comportant une butée pour le bras de levier (7) de la mâchoire (5) s'étendant vers la tige filetée (4) (Fig. 1, 2, 8).

8. Dispositif antidérapant selon la revendication 7, caractérisé en ce que la butée pour le bras de levier (7) de la mâchoire (5) s'étendant vers la tige filetée (4) est formée par une arête (9) du prolongement du coulisseau (10) formant un angle vers l'axe (4a) de la tige filetée (Fig. 1, 2, 8).

9. Dispositif antidérapant selon la revendication 8, caractérisé en ce que le prolongement formant un angle par rapport au coulisseau (10) comporte dans la zone de son extrémité le point d'appui de l'axe de rotation (6) pour les mâchoirs (5) (Fig. 1, 2, 8).

10. Dispositif antidérapant selon une des revendications 7 à 9, caractérisé en ce qu'au moins les bras (14) des mâchoirs (5) s'étendant à partir de l'axe de rotation (6) des mâchoires (5) et de la tige filetée (4) sont flexibles et sont en particulier pourvus en forme de ressort à lames, la largeur de la fente (41) entre la paroi (42) du bras élastique (14) tournée vers la paroi du pneu (15) étant moins grande dans au moins un point situé entre l'extrémité libre des mâchoires élastiques (5) et l'axe de rotation (6) des mâchoires (5) que l'élargissement de la section transversale du pneu (1) en ce point au cours du mouvement de foulage (Fig. 8 à 10).

11. Dispositif antidérapant selon une des revendications 7 à 10, la tige filetée (4) comportant au moins à l'une des ses extrémitées un polygone (13), en particulier un quatre-pans, pour recevoir une clef à douille (45), caractérisé en ce qu'un ressort à lames (43) traversé par la tige filetée (4) est disposé au coulisseau (10) et que le ressort à lames (43) comporte une zone (43a) s'étendant élastiquement vers le polygone (13) de la tige filetée (4), que la zone (43a) comporte un évidement (44) correspondant à la largeur du polygone (13), l'évidement enfermant le polygone (13) et bloquant le polygone contre la rotation mais apte à être déplacé hors de l'engrenage avec le polygone (13) par l'application de la clef de manœuvre (45) sur le polygone (13) au moyen de la chape extérieure de la clef de manœuvre (45) (Fig. 15 à 17).

FIG.1

FIG.2

FIG.6

FIG.4

FIG.3

FIG.5

FIG.7

0007297

FIG.8

FIG.9

FIG.10

15

FIG. 11

FIG. 12

FIG.13

FIG.14

0007297

FIG.15

FIG.16

FIG.17